# EUROPÄISCHE PATENTSCHRIFT

(11) **EP 2 495 059 B1**
(45) Veröffentlichungstag und Bekanntmachung des Hinweises auf die Patenterteilung: **19.07.2017**
(21) Anmeldenummer: 11156437.3
(22) Anmeldetag: 01.03.2011
(51) Int. Cl.: B23B 31/26, B23B 31/28, B23Q 17/00, G05B 19/418, H04L 29/08

(54) **Werkzeuglösevorrichtung, Inbetriebnahmeverfahren und Betriebsverfahren**
Tool removal device, operation method and commissioning method
Dispositif de libération d'outil, procédé de mise en service et procédé de fonctionnement

(43) Veröffentlichungstag der Anmeldung: 05.09.2012
(73) Patentinhaber: Siemens Aktiengesellschaft, 80333 München (DE)
(72) Erfinder: Mueller, Juergen, 97490, Poppenhausen (DE); Medla, Norbert, 91341, Röttenbach (DE)

(56) Entgegenhaltungen:
- EP-A1- 2 138 253
- EP-A2- 1 162 524
- EP-A2- 1 570 933
- WO-A1-2008/015054
- DE-A1- 10 101 093
- DE-A1-102004 046 415
- JP-A- 2009 018 353

## Beschreibung

Die vorliegende Erfindung betrifft eine Werkzeuglösevorrichtung gemäß dem Oberbegriff des Patentanspruchs 1, für eine Werkzeugmaschinenspindel mit einem Gehäuse, einer Stellwelle zum Bewegen einer Zugstange der Werkzeugmaschinenspindel, wobei die Stellwelle in dem Gehäuse axial beweglich gelagert ist, einer Antriebseinrichtung in dem Gehäuse zum Antreiben der Stellwelle in axialer Richtung und einer Steuereinrichtung in dem Gehäuse oder außerhalb des Gehäuses zum Steuern der Antriebseinrichtung. Darüber hinaus betrifft die vorliegende Erfindung ein Verfahren zur Inbetriebnahme einer oben genannten Werkzeuglösevorrichtung. Ferner betrifft die vorliegende Erfindung auch ein Verfahren zum Betrieb einer derartigen Werkzeuglösevorrichtung.

Werkzeuglösevorrichtungen werden an Werkzeugmaschinenspindeln verbaut, um die in der entsprechenden Werkzeugschnittstelle der Spindel mit einem Werkzeugspannsystem mittels Kraft durch ein Federpaket oder durch ein Gasfedersystem oder durch einen selbsthemmenden Mechanismus gehaltenen Werkzeuge bei einem Werkzeugwechsel lösen zu können. Um die Haltekraft des Werkzeugspannsystems für einen Werkzeugwechsel aufzuheben, wird mittels hydraulischem oder pneumatischem Druck oder elektromechanisch gegen die wirkende Federkraft solange eine Kraft aufgebaut, bis das Werkzeug aus der Schnittstelle in der Spindel ausgestoßen werden kann. Beispielsweise besitzt die Werkzeuglösevorrichtung, auch als Löseeinheit bezeichnet, einen Elektromotor, der über ein Getriebe die Rotationsbewegung in eine lineare Achsbewegung umsetzt. Ferner kann sie einen Drehgeber zur Erfassung der Drehposition des Rotors und ein hochgenaues lineares Messsystem zur exakten Erfassung der axialen Bewegung beziehungsweise Position der Stellwelle der Werkzeuglösevorrichtung aufweisen, um mit diesen erfassten Werten eine axiale Bewegung der Stellwelle der Werkzeuglösevorrichtung mikrometergenau zu steuern.

Bislang werden zum Betreiben der elektromechanischen Löseeinheit Antriebsparameter und Steuerungsparameter im jeweiligen Antrieb und in der Steuerung hinterlegt. Zu den Antriebsparametern zählen Motorparameter, Drehgeberparameter und Parameter für das lineare Messsystem. Alle Parameter müssen vor dem Betrieb der elektromechanischen Löseeinheit in die entsprechende Antriebseinrichtung und Steuereinrichtung der Maschine, d. h. die Werkzeugmaschinenspindel beziehungsweise die Werkzeuglösevorrichtung einprogrammiert werden. Eine Werkzeuglösevorrichtung gemäß dem Oberbegriff des Patentanspruchs 1 geht beispielsweise aus der EP 2 138 253 A1 hervor. Aus der Druckschrift EP 2 138 253 A1 ist eine Werkzeuglösevorrichtung für eine Werkzeugmaschinenspindel mit einem Hydraulikzylindergehäuse bekannt. Die Vorrichtung besitzt eine Stellwelle zum Bewegen einer Zugstange der Werkzeugmaschinenspindel, wobei die Stellwelle in dem Gehäuse axial bewegbar ist. Außerdem ist ein Hydraulikzylinder zum Bewegen der Zugstange vorgesehen. Eine Steuereinrichtung außerhalb des Gehäuses steuert die hydraulische Antriebseinrichtung. Daten bezüglich der Druckkraft und der Hubbewegung des Kolbens werden in einer Speichereinrichtung gespeichert.

Die Aufgabe der vorliegenden Erfindung besteht somit darin, eine Werkzeuglösevorrichtung für eine Werkzeugmaschinenspindel bereitzustellen, die einfacher in Betrieb genommen und betrieben werden kann. Außerdem ist ein entsprechendes Inbetriebnahmeverfahren und Betriebsverfahren bereitzustellen.

Erfindungsgemäß wird diese Aufgabe gelöst durch eine Werkzeuglösevorrichtung nach Anspruch 1.

In vorteilhafter Weise ist es durch die Speichereinrichtung und die Schnittstelleneinrichtung möglich, die Werkzeuglösevorrichtung als eigenständiges Modul bereitzustellen, das mit wenigen Handgriffen installiert und in Betrieb genommen werden kann. Insbesondere erleichtert die Datenübertragung von der Speichereinrichtung über die Schnittstelleneinrichtung zu einem Datennetz den Vorgang der Inbetriebnahme.

Vorzugsweise umfasst die Antriebseinrichtung einen Linearmotor oder einen Rotationsmotor mit Getriebe zum Umsetzen der rotatorischen in eine lineare Bewegung. Damit lässt sich die Stellwelle der Werkzeuglösevorrichtung und somit auch die Zugstange einer Werkzeugmaschinenspindel sehr präzise bewegen. Alternativ kann der Antrieb aber auch hydraulisch oder pneumatisch erfolgen.

Die Schnittstelleneinrichtung kann zur bidirektionalen Kommunikation ausgebildet sein. Dies hat den Vorteil, dass dann auch von dem Datennetz in die Speichereinrichtung der Werkzeuglösevorrichtung Daten geschrieben werden können. So lässt sich die Werkzeuglösevorrichtung beispielsweise speziell für eine Werkzeugmaschinenspindel oder für spezielles Werkzeug konfigurieren.

Die Werkzeuglösevorrichtung kann außerdem eine Messeinrichtung aufweisen, um einen Parameter der Antriebseinrichtung, der Steuereinrichtung oder der Stellwelle zu messen. Insbesondere kann die Messeinrichtung dazu ausgelegt sein, einen Strom oder eine Leistung der Antriebseinrichtung zu messen. Mit den gemessenen Werten kann indirekt auf die Kraft geschlossen werden, die die Antriebseinrichtung auf die Stellwelle und damit auf die Zugstange der Werkzeugmaschinenspindel ausübt. Diese Kraft ist ein Maß dafür, wie stark ein Werkzeug in der Werkzeugmaschinenspindel gehalten wird.

Die Messeinrichtung kann aber auch dazu ausgebildet sein, eine Position und/oder ein Bewegungsmaß der Stellwelle oder Zugstange zu messen. Damit können stets aktuelle Bewegungswerte für den Werkzeugwechsel ermittelt werden.

Vorteilhaft ist ferner, wenn die Werkzeuglösevorrichtung eine Vergleichseinrichtung aufweist zum Vergleichen des gemessenen Parameterwerts mit einem in der Speichereinrichtung abgespeicherten Grundwert und zum Bereitstellen einer entsprechenden Vergleichsinformation über die Schnittstelleneinrichtung für das Datennetz. Auf diese Weise lassen sich die Werkzeuglösevorrichtung und der Werkzeugwechselvorgang dynamisch überwachen.

Die oben genannte Aufgabe wird erfindungsgemäß auch gelöst durch ein Verfahren zur Inbetriebnahme einer Werkzeuglösevorrichtung der genannten Art durch
- Anbringen der Werkzeuglösevorrichtung an der Werkzeugmaschinenspindel,
- Anstecken der Schnittstelleneinrichtung an das Datennetz und
- automatisches Übertragen der Daten der Speichereinrichtung über die Schnittstelleneinrichtung in das Datennetz.

In vorteilhafter Weise lässt sich damit eine oben näher geschilderte Werkzeuglösevorrichtung ohne großen Aufwand in Betrieb nehmen, da sie lediglich an der Werkzeugmaschinenspindel angebracht und an ein Datennetz angesteckt werden muss. Die Daten für die Inbetriebnahme werden dann automatisch von der Speichereinrichtung über die Schnittstelleneinrichtung in das Datennetz übertragen.

Gemäß einer besonders bevorzugten Ausführungsform beginnt das automatische Übertragen der Daten der Speichereinrichtung unmittelbar mit dem Anstecken der Schnittstelleneinrichtung an das Datennetz. Damit ist eine Werkzeuglöseeinrichtung einfach nach dem Prinzip "Plug & Play" installierbar beziehungsweise in Betrieb zu nehmen.

Erfindungsgemäß wird auch ein Verfahren zum Betrieb der oben dargestellten Werkzeuglösevorrichtung bereitgestellt. Die Werkzeuglösevorrichtung ist an eine Werkzeugmaschinenspindel angebracht. Ein Parameter der Antriebseinrichtung oder der Steuereinrichtung wird gemessen und ein entsprechender Messwert wird in der Speichereinrichtung gespeichert. Der gespeicherte Messwert wird dann zum Auslesen über die Schnittstelleneinrichtung bereitgestellt. Auf diese Weise können stets aktuelle Daten der Werkzeuglösevorrichtung in dem Datennetz zur Überwachung bereitgestellt werden.

Des Weiteren ist es günstig, wenn ein Speichern von Daten aus dem Datennetz in der Speichereinrichtung für die Antriebseinrichtung und/oder die Steuereinrichtung möglich ist. Auf diese Weise können von außen einfach Steuerungs- und Konfigurationsdaten auf die Werkzeuglösevorrichtung übertragen werden.

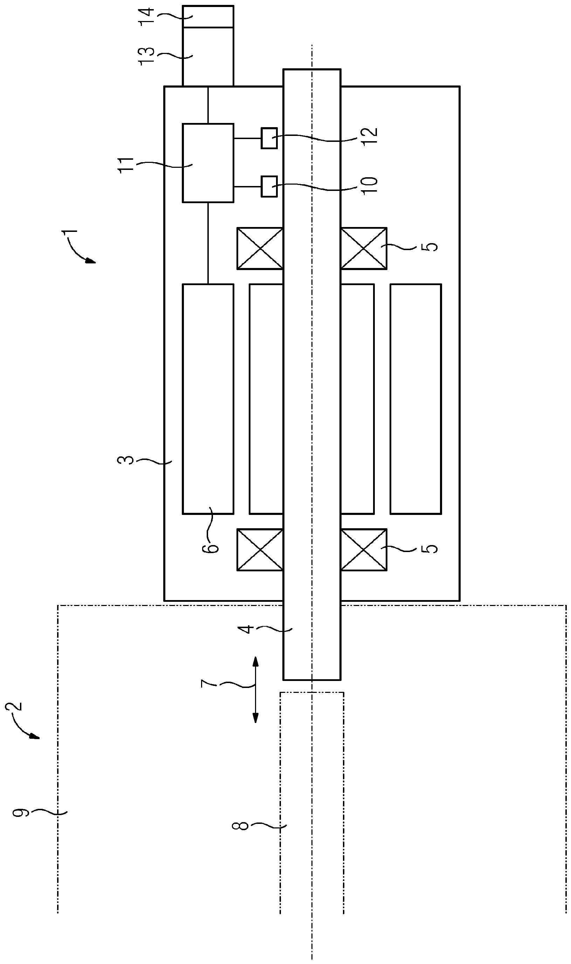

Die vorliegende Erfindung wird anhand der beigefügten Zeichnung näher erläutert, die eine Prinzipskizze einer erfindungsgemäßen Werkzeuglösevorrichtung angebracht an eine Werkzeugmaschinenspindel zeigt.

Die nachfolgend näher geschilderten Ausführungsbeispiele stellen bevorzugte Ausführungsformen der vorliegenden Erfindung dar.

Die Figur zeigt einen Längsschnitt durch eine Werkzeuglösevorrichtung 1, die an einer Werkzeugmaschinenspindel 2 befestigt ist. Die Werkzeuglösevorrichtung 1 besitzt ein Gehäuse 3, in dem eine Stellwelle 4 axial beweglich gelagert ist. Die Lagerung erfolgt mithilfe zweier Lager 5. Dabei kann es sich um jegliche Art von Lager, insbesondere um Wälzlager handeln.

Zwischen den Lagern 5 ist hier symbolisch ein Motor 6 angedeutet. Bei dem Motor kann es sich um einen Linearmotor oder um einen rotatorischen beziehungsweise Servomotor handeln. In jedem Fall soll der Motor 6 die Stellwelle 4 in axialer Richtung gemäß dem Doppelpfeil 7 bewegen. Wird hierfür also kein Linearmotor verwendet, muss die rotatorische Bewegung des Motors in eine axiale Bewegung umgesetzt werden. Dies erfolgt in üblicherweise durch ein entsprechendes Getriebe.

In das Futter bzw. die Spannzangen (d. h. Werkzeugschnittstelle) ist im Betrieb ein Werkzeug eingespannt (in der Figur nicht dargestellt). Die hierfür nötige Spannkraft wird durch eine oder mehrere Federn oder durch ein Gasfedersystem oder durch einen selbsthemmenden Mechanismus(ebenfalls nicht dargestellt) aufgebracht. Das Futter beziehungsweise die Spannzangen lassen sich durch Druck auf eine so genannte Zugstange 8 des Spannsystems entgegen der Federkraft öffnen. Den hierfür nötigen Druck bringt die Stellwelle 4 auf.

Die Stellwelle 4 ist vorzugsweise koaxial mit der Zugstange 8 angeordnet. Die Zugstange 8 vollführt also axiale Bewegungen in Richtung des Doppelpfeils 7, die von der Stellwelle durch stirnseitigen Druck initiiert werden.

Die Werkzeuglösevorrichtung 1 ist an der Werkzeugmaschinenspindel 2 befestigt, indem das Gehäuse 3 der Werkzeuglösevorrichtung an das Gehäuse 9 der Werkzeugmaschinenspindel montiert ist. Die Stellwelle 4 ragt dann beispielsweise im kraftlosen Zustand in das Gehäuse 9 der Werkzeugmaschinenspindel 2.

Die elektromechanische Werkzeuglösevorrichtung 1, d. h. die Löseeinheit, besitzt neben dem Antrieb (z. B. Elektromotor 6 mit Getriebe zur Umsetzung der Rotation in axiale Bewegung) einen Drehgeber 10, mit dem eine Winkelposition des Rotors des Elektromotors 6 beziehungsweise der Stellwelle 4 erkannt werden kann. Entsprechende Winkelpositionsdaten werden von dem Drehgeber 10 an eine Steuereinrichtung 11 der Werkzeuglösevorrichtung 1 geliefert.

Außerdem verfügt die Werkzeuglösevorrichtung 1 über eine hochgenaue Längenmesseinrichtung 12. Sie liefert mikrometergenau die axiale Position beziehungsweise Daten über die axiale Position oder Relativbewegung der Stellwelle 4 an die Steuereinrichtung 11.

Zusätzlich verfügt die Werkzeuglösevorrichtung 1 über eine Speichereinrichtung 13 und eine Schnittstelleneinrichtung 14. Die Speichereinrichtung 13 ist hier außen am Gehäuse 3 angebracht. Sie kann sich aber ebenso innerhalb des Gehäuses 3 befinden. Elektrisch ist sie mit der Steuereinrichtung 11 verbunden, sodass Daten von der Steuereinrichtung 11 beziehungsweise dem Drehgeber 10 oder der Längenmesseinrichtung 12 in der Speichereinrichtung 13 abgelegt werden können. Umgekehrt können auch Daten aus der Speichereinrichtung 13 für die Steuerung des Antriebs mithilfe der Steuereinrichtung 11 verwendet werden.

Die Werkzeuglösevorrichtung verfügt hier außerdem über eine Schnittstelle 14, die in dem Beispiel der Figur unmittelbar an der Speichereinrichtung 13 angeordnet ist. Die Schnittstelleneinrichtung 14 kann aber auch an einer anderen Stelle im oder am Gehäuse 3 vorgesehen sein. Wesentlich ist, dass mit ihr Daten aus der Speichereinrichtung 13 in ein Datennetz übertragen werden können. Die Datenschnittstelle 14 kann ein Modemelement, z. B. nach Art einer Steckkarte für Personal-Computer aufweisen, um sich von einer externen EDV-Station (z. B. einem Personal-Computer beim Hersteller der Spindel oder der Werkzeuglösevorrichtung) über einen Provider in die jeweilige Werkzeuglösevorrichtung einwählen zu können und eine Datenübertragung zwischen der externen EDV-Station und der Einheit aus Datenspeicherelement und/oder Datenverarbeitungselement und Modemelement möglich zu machen.

Dabei kann eine Datenübertragung zwischen Werkzeuglösevorrichtung und externer EDV-Station über die integrierte Schnittstelle 14 nach einem Internet-Datenprotokoll erfolgen. Die Verbindung zwischen externer EDV-Station und Werkzeuglösevorrichtung kann über eine Telefonleitung bei Bedarf hergestellt oder auch als Standleitung vorhanden sein. Ferner können sämtliche Leitungssysteme (z. B. auch das Stromnetz) zur Datenübertragung verwendet werden.

Gemäß einer vorteilhaften Ausführungsform kann auch bei Bedarf von der Werkzeuglösevorrichtung eine Datenverbindung zu einer externen EDV-Station hergestellt werden, sodass ausgehend von der Werkzeuglösevorrichtung durch Anwählen der IP-Adresse der externen EDV-Station eine Datenverbindung wie zwischen zwei Personal-Computern entsteht.

Bei einer Datenübertragung nach einem Internet-Datenprotokoll können ergänzend oder alternativ ein TCP/IP-Datenprotokoll (Transmission Control Protocol/Internet Protocol), ein SMTP-Datenprotokoll (Simple Mail Transfer Protocol), ein POP-Datenprotokoll (Post Office Protokoll), HTTP-Datenprotokoll (Hyper Text Transfer Protocol), NNTP-Datenprotokoll (Network News Transfer Protocol), ein FTP-Datenprotokoll (File Transfer Protocol) und/oder ein WAP-Datenprotokoll (Wireless Application Protocol) verwendet werden.

Die Auswahl des jeweiligen Datenprotokolls richtet sich unter anderem nach der Art und Menge der zu übertragenden Daten. Falls gewünscht ist, dass das Servicepersonal über ein Mobiltelefon bestimmte Kennwerte der Werkzeuglösevorrichtung aus dem Datenspeicherelement 13 abfragen kann, könnte z. B. eine Datenübertragung nach dem WAP-Datenprotokoll stattfinden.

Die integrierte Schnittstelle 14 kann zur kabelgebundenen oder kabellosen Datenübertragung (z. B. über Funksignale, Infrarotsignale etc.) ausgebildet sein. Bei einer kabellosen Datenübertragung kann z. B. vom Servicepersonal über einen geeigneten funkgesteuerten oder infrarotgesteuerten Datenleser ein Auslesen der im Speicherelement 13 abgespeicherten Messdaten stattfinden.

Die integrierte Schnittstelle 14 kann z. B. als RS232/RS485-Schnittstelle ausgebildet sein, wodurch z. B. eine externe EDV-Station, die als Diagnosecomputer vom Servicepersonal vor Ort benutzt wird, mit dem integrierten Datenspeicherelement 13 und/oder Steuereinrichtung 11 zum Auslesen der vorliegenden Messdaten verbunden werden kann.

Ferner kann die Schnittstelle 14 als Datenbus-Schnittstelle z. B. zur Übertragung von Datenbus-Protokollen gemäß den Standards USB (PC), PROFI-BUS-DP, INTERBUS-S, CAN-BUS und SERCOS ausgebildet sein.

Um bisherige elektromagnetische Werkzeuglösevorrichtungen betreiben zu können, mussten die Motorantriebsparameter und die Geberdaten für Drehgeber und für das lineare Messsystem am Frequenzumrichter programmiert werden. Zusätzlich musste die Funktion der elektromechanischen Werkzeuglösevorrichtung in der Maschinensteuerung programmiert werden. Hierzu war ein entsprechender Verkabelungs- und Inbetriebnahmeaufwand erforderlich.

Dadurch, dass die erfindungsgemäße Werkzeuglösevorrichtung eine Speichereinrichtung 13 und eine entsprechende Schnittstelleneinrichtung 14 (vorzugsweise standardisiert) aufweist, kann der Aufwand für die Inbetriebnahme reduziert werden. Speziell für die Inbetriebnahme der elektromechanischen Werkzeuglösevorrichtung beziehungsweise Löseeinheit müssen Antriebs- und Steuerungsparameter nun nicht mehr im Frequenzumrichter und in der Steuerung programmiert werden. Vielmehr werden mit der standardisierten integrierten Schnittstelle an der elektromechanischen Werkzeuglösevorrichtung alle Betriebs- und Steuerungsparameter für den Betrieb der Löseeinheit am Frequenzumrichter und an der Steuerung gespeichert und mit der Verkabelung an eine Steuerung beziehungsweise ein Datennetz automatisch übermittelt ("Plug & Play"). Hierbei werden die Antriebsparameter und Steuerungsparameter auf das an die elektromechanische Werkzeuglösevorrichtung angebaute oder integrierte Speicherelement 13 hinterlegt und beim Verbinden mit der Steuerung werden die entsprechenden Daten automatisch an die Steuerung überspielt. Die elektromechanische Werkzeuglösevorrichtung kann somit nach Anbindung an das Datennetz beziehungsweise die Steuerung automatisch in Betrieb genommen werden. Ein zusätzlicher Programmieraufwand an der Maschine ist nicht nötig.

Vorteilhaft an dieser standardisierten Schnittstelle mit Speicherbaustein (SMI) ist zum einen das Einsparungspotential von Verkabelungsaufwand für den Elektromotor, den Drehgeber und das lineare Gebersystem. Zum anderen ergibt sich eine kurze Inbetriebnahmezeit durch "Plug & Play". Des Weiteren lassen sich, da ein getestetes, geschlossenes System realisiert werden kann, leichter Fehler vermeiden.

Gemäß einer weiteren Ausführungsform können auf dem Speicherelement 13 der Werkzeuglösevorrichtung 1 Grunddaten hinterlegt werden, die sich auf die elektromechanische Werkzeuglösevorrichtung und die Werkzeugmaschinenspindel beziehen. Beispielsweise kann es sich bei diesen Grunddaten um eine Ausstoßkraft eines neuwertigen Spannsystems oder eine werkzeugabhängige Zugstangenendlageposition handeln. Bei einem Vergleich der während des Betriebs aufgenommenen Messdaten mit den Grunddaten durch eine beispielsweise in die Steuereinrichtung 11 integrierte Vergleichseinrichtung können unterschiedliche Überwachungsfunktionen z. B. über den Verschleiß des Federpakets der Spannzange oder zur Erkennung von "Span in der Spindel" realisiert werden.

Wird beim Werkzeugwechsel ein Span zwischen eine Anlagefläche (Plananlage oder Kegelfläche) des Werkzeughalters oder des Werkzeugs geklemmt, dann kommt es zu einer undefinierten Anlage des Werkzeugs in der Spindel und dadurch zu Bearbeitungsfehlern. Bei einem Span in der Spindel würde die Zugstange, auf die die elektromechanische Löseeinheit zum Lösen eines Werkzeugs auffährt, nach dem Spannvorgang des Werkzeugs nicht in die Endlage zurückfahren. Diese Endlage ist von Werkzeug zu Werkzeug unterschiedlich.

Vorzugsweise lässt sich nun die Zugstangenendlageposition für jedes Werkzeug erkennen und in der Speichereinrichtung 13 speichern (Grunddaten). Während des Betriebs lässt sich die Endlage der Zugstangenendposition nach jedem Werkzeugwechsel messen. Bei einer Abweichung der Grunddaten (Solldaten) von den Messdaten, d. h. einer Abweichung zwischen Endlageposition und Sollposition kann nun eine entsprechende Reaktion erfolgen. Beispielsweise kann der Betrieb der Maschine unterbrochen oder eine entsprechende Warnmeldung ausgegeben werden.

Bei einer weiteren Ausführungsform kann, wie erwähnt, die Funktionalität "Einzugskraftmessung" bereitgestellt werden. Wie oben bereits dargestellt wurde, wird das Werkzeug durch eine Federkraft nach dem Werkzeugspannen in der Spindel-Werkzeug-Schnittstelle gehalten. Die Federkraft muss nach einem bestimmten Wartungsintervall gemessen und überprüft werden. Dazu wird manuell ein Messwerkzeug eingewechselt, welches nach dem Spannen die Einzugskraft misst.

Die notwendige Kraft zum Ausstoßen des Werkzeugs kann indirekt über die aufgenommene Leistung des Motors 6 der elektromechanischen Werkzeuglösevorrichtung 1 ermittelt werden. Aus dieser Kraft kann man auf die Einzugskraft des Spannsystems beziehungsweise den Zustand des Federpakets des Spannsystems schließen. Es kann wiederum die Ausstoßkraft bei optimaler Einzugskraft ermittelt und in der Speichereinrichtung 13 abgespeichert werden. Während des Betriebs wird dann die Ausstoßkraft indirekt über die Leistungs- beziehungsweise Stromaufnahme des Motors ermittelt. Hierzu kann ein Strommesser in die Steuereinrichtung integriert sein. Die Messwerte können ständig mit den in der Speichereinrichtung 13 abgespeicherten Werten verglichen werden. Im Falle einer Abweichung kann wiederum eine entsprechende Reaktion (z. B. Warnung) erfolgen. In vorteilhafter Weise können also für den Neuzustand des Werkzeugspannsystems Grunddaten in der Speichereinrichtung hinterlegt und für Überwachungsfunktionen (z. B. Überwachung der Federspannkraft oder Überwachung "Span in Spindel") verwendet werden. Hierdurch lassen sich Nebenzeiten durch manuelle Überwachung einsparen. Außerdem lässt sich hierdurch eine höhere Produktivität durch Vermeidung von Ausschussteilen erreichen.

## Patentansprüche

1. Werkzeuglösevorrichtung (1) für eine Werkzeugmaschinenspindel (2) mit
- einem Gehäuse (3),
- einer Stellwelle (4) zum Bewegen einer Zugstange (8) der Werkzeugmaschinenspindel (2), wobei die Stellwelle (4) in dem Gehäuse (3) axial beweglich gelagert ist,
- einer Antriebseinrichtung (6) in dem Gehäuse (3) zum Antreiben der Stellwelle (4) in axialer Richtung und
- einer Steuereinrichtung (11) in dem Gehäuse (3) oder außerhalb des Gehäuses zum Steuern der Antriebseinrichtung (6), sowie
- einer Speichereinrichtung (13), zum Speichern von Daten bezüglich der Antriebseinrichtung (6) und/oder der Steuereinrichtung (11),
**gekennzeichnet durch**
- eine Schnittstelleneinrichtung (14) zum Bereitstellen der Daten der Speichereinrichtung (13) für ein Datennetz, wobei
- die Speichereinrichtung außen am Gehäuse (3) oder inner-halb des Gehäuses (3) angebracht ist und
- die Schnittstelleneinrichtung im oder am Gehäuse angeordnet ist.

2. Werkzeuglösevorrichtung nach Anspruch 1, wobei die Antriebseinrichtung (6) einen Linearmotor oder einen Rotationsmotor mit Getriebe zum Umsetzen der rotatorischen in eine lineare Bewegung umfasst.

3. Werkzuglösevorrichtung nach Anspruch 1 oder 2, wobei die Schnittstelleneinrichtung (14) zur bidirektionalen Kommunikation ausgebildet ist.

4. Werkzeuglösevorrichtung nach einem der vorhergehenden Ansprüche, die eine Messeinrichtung (10, 12) aufweist, um einen Parameter der Antriebseinrichtung (6), der Steuereinrichtung (11) oder der Stellwelle (4) zu messen.

5. Werkzeuglösevorrichtung nach Anspruch 4, wobei mit der Messeinrichtung ein Strom oder eine Leistung der Antriebseinrichtung (6) messbar ist.

6. Werkzeuglösevorrichtung nach Anspruch 4 oder 5, wobei mit der Messeinrichtung (10, 12) eine Position und/oder ein Bewegungsmaß der Stellwelle (4) oder Zugstange (8) messbar ist.

7. Werkzeuglösevorrichtung nach einem der Ansprüche 4 bis 6, die eine Vergleichseinrichtung zum Vergleichen des gemessenen Parameterwerts mit einem in der Speichereinrichtung (13) abgespeicherten Grundwert und zum Bereitstellen einer entsprechenden Vergleichsinformation über die Schnittstelleneinrichtung (14) für das Datennetz aufweist.

8. Verfahren zur Inbetriebnahme einer Werkzeuglösevorrichtung (1) nach einem der vorhergehenden Ansprüche durch
- Anbringen der Werkzeuglösevorrichtung (1) an der Werkzeugmaschinenspindel (2),
- Anstecken der Schnittstelleneinrichtung (14) an das Datennetz und
- automatisches Übertragen der Daten der Speichereinrichtung (13) über die Schnittstelleneinrichtung (14) in das Datennetz.

9. Verfahren nach Anspruch 8, wobei das automatische Übertragen der Daten der Speichereinrichtung (13) unmittelbar mit dem Anstecken der Schnittstelleneinrichtung (14) an das Datennetz beginnt.

10. Verfahren zum Betrieb einer Werkzeuglösevorrichtung (1) gemäß einem der Ansprüche 1 bis 7, die an der Werkzeugmaschinenspindel (2) angebracht ist, durch
- Messen eines Parameters der Antriebseinrichtung (6) oder der Steuereinrichtung (11),
- Speichern eines entsprechenden Messwerts in der Speichereinrichtung (13) und
- Bereitstellen des gespeicherten Messwerts zum Auslesen über die Schnittstelleneinrichtung (14).

11. Verfahren nach Anspruch 10, wobei ein Speichern von Daten aus dem Datennetz in der Speichereinrichtung (13) für die Antriebseinrichtung (6) und/oder die Steuereinrichtung (11) erfolgt.

## Claims

1. Tool removal apparatus (1) for a machine tool spindle (2), having
- a housing (3),
- an actuating shaft (4) for moving a tension rod (8) of the machine tool spindle (2), wherein the actuating shaft (4) is mounted in the housing (3) in an axially movable manner,
- a drive device (6) in the housing (3) for driving the actuating shaft (4) in the axial direction and
- a control device (11) in the housing (3) or outside the housing for controlling the drive device (6), as well as
- a memory device (13) for storing data relating to the drive device (6) and/or the control device (11),
**characterised by**
- an interface device (14) for providing the data of the memory device (13) for a data network, wherein
- the memory device is attached on the outside of the housing (3) or on the inside of the housing (3) and
- the interface device is arranged in or on the housing.

2. Tool removal apparatus according to claim 1, wherein the drive device (6) comprises a linear motor or a rotary motor with a transmission for converting the rotary motion into a linear motion.

3. Tool removal apparatus according to claim 1 or 2, wherein the interface device (14) is embodied for bidirectional communication.

4. Tool removal apparatus according to one of the preceding claims, which has a measuring device (10, 12) in order to measure a parameter of the drive device (6), the control device (11) or the actuating shaft (4).

5. Tool removal apparatus according to claim 4, wherein a current or a power of the drive device (6) can be measured using the measuring device.

6. Tool removal apparatus according to claim 4 or 5, wherein a position and/or a degree of motion of the actuating shaft (4) or tensile rod (8) can be measured using the measuring device (10, 12).

7. Tool removal apparatus according to one of claims 4 to 6, which has a comparison device for comparing the measured parameter value with a base value stored in the memory device (13) and for providing a corresponding item of comparison information via the interface device (14) for the data network.

8. Method for commissioning a tool removal apparatus (1) according to one of the preceding claims by
- affixing the tool removal apparatus (1) to the machine tool spindle (2),
- plugging the interface device (14) into the data network and
- automatically transferring the data of the memory device (13) via the interface device (14) into the data network.

9. Method according to claim 8, wherein the automatic transfer of the data of the memory device (13) takes place immediately upon plugging the interface device (14) into the data network.

10. Method for operating a tool removal apparatus (1) according to one of claims 1 to 7, which is attached to the machine tool spindle (2), by
- measuring a parameter of the drive device (6) or the control device (11),
- storing a corresponding measured value in the memory device (13) and
- providing the stored measured value for readout via the interface device (14).

11. Method according to claim 10, wherein data from the data network is stored in the memory device (13) for the drive device (6) and/or the control device (11).

## Revendications

1. Dispositif ( 1 ) de libération d'outil pour une broche ( 2 ) de machine-outil, comprenant
- une enveloppe ( 3 ),
- un arbre ( 4 ) d'actionnement, pour déplacer une barre ( 8 ) de traction de la broche ( 2 ) de la machine-outil, l'arbre ( 4 ) d'actionnement étant monté mobile axialement dans l'enveloppe ( 3 ),
- un dispositif ( 6 ) d'entraînement dans l'enveloppe ( 3 ), pour entraîner l'arbre ( 4 ) d'actionnement dans la direction axiale et
- un dispositif ( 11 ) de commande dans l'enveloppe ( 3 ) ou à l'extérieur de l'enveloppe, pour commander le dispositif ( 6 ) d'entraînement ainsi que
- un dispositif ( 13 ) de mémorisation, pour mémoriser des données concernant le dispositif ( 6 ) d'entraînement et/ou le dispositif ( 11 ) de commande,
**caractérisé par**
- un dispositif ( 14 ) d'interface, pour mettre les données du dispositif ( 13 ) de mémorisation, à disposition d'un réseau de données, dans lequel
- le dispositif de mémorisation est mis à l'extérieur sur l'enveloppe ( 3 ) ou à l'intérieur de l'enveloppe ( 3 ) et
- le dispositif d'interface est mis dans ou sur l'enveloppe.

2. Dispositif de libération d'outil suivant la revendication 1, dans lequel le dispositif ( 6 ) d'entraînement comprend un moteur linéaire ou un moteur tournant, ayant une transmission de transformation du mouvement de rotation en un mouvement linéaire.

3. Dispositif de libération d'outil suivant la revendication 1 ou 2, dans lequel le dispositif ( 14 ) d'interface est constitué pour une communication bidirectionnelle.

4. Dispositif de libération d'outil suivant l'une des revendications précédentes, qui a un dispositif ( 10, 12 ) de mesure, pour mesurer un paramètre du dispositif ( 6 ) d'entraînement, du dispositif ( 11 ) de commande ou de l'arbre ( 4 ) d'actionnement.

5. Dispositif de libération d'outil suivant la revendication 4, dans lequel un courant électrique ou une puissance du dispositif ( 6 ) d'entraînement peut être mesuré par le dispositif de mesure.

6. Dispositif de libération d'outil suivant la revendication 4 ou 5, dans lequel le dispositif ( 10, 12 ) de mesure peut mesurer une position et/ou un déplacement de l'arbre ( 4 ) d'actionnement ou de la barre ( 8 ) de traction.

7. Dispositif de libération d'outil suivant l'une des revendications 4 à 6, qui a un dispositif de comparaison, pour comparer la valeur mesurée d'un paramètre, à une valeur de base mémorisée dans le dispositif ( 13 ) de mémorisation et pour mettre, par l'intermédiaire du dispositif ( 14 ) d'interface, une information de comparaison correspondante à la disposition du réseau de données.

8. Procédé de mise en service d'un dispositif ( 1 ) de libération d'outil suivant l'une des revendications précédentes, par
- mise du dispositif ( 1 ) de libération d'outil sur la broche ( 2 ) de la machine-outil,
- Enfichage du dispositif ( 14 ) d'interface sur le réseau de données et
- transmission automatique des données du dispositif ( 13 ) de mémorisation au réseau de données, par l'intermédiaire des dispositifs ( 14 ) d'interface.

9. Procédé suivant la revendication 8, dans lequel la transmission automatique des données du dispositif ( 13 ) de mémorisation débute immédiatement avec l'enfichage du dispositif ( 14 ) d'interface sur le réseau de données.

10. Procédé pour faire fonctionner un dispositif ( 1 ) de libération d'outil suivant l'une des revendications 1 à 7, qui est mis sur la broche ( 2 ) de la machine-outil par
- mesure d'un paramètre du dispositif ( 6 ) d'entraînement ou du dispositif ( 11 ) de commande,
- mémorisation d'une valeur de mesure correspondante dans le dispositif ( 13 ) de mémorisation et
- mise à disposition de la valeur de mesure mémorisée, pour lecture par l'intermédiaire du dispositif ( 14 ) d'interface.

11. Procédé suivant la revendication 10, dans lequel une mémorisation de données a lieu du réseau de données au dispositif ( 13 ) de mémorisation, pour le dispositif ( 6 ) d'entraînement et/ou le dispositif ( 11 ) de commande.
